# DEMANDE DE BREVET EUROPEEN

(11) **EP 4 800 284 A1**
(43) Date de publication de la demande: **02.09.2026**
(21) Numéro de dépôt: 26155632.8
(22) Date de dépôt: 02.02.2026
(51) Int. Cl.: F17C 3/00

(54) **ENSEMBLE DE STOCKAGE D'UN FLUIDE CRYOGÉNIQUE LIQUÉFIÉ, VÉHICULE ET PROCÉDÉ**

(30) Priorité: 27.02.2025 FR 2501998
(71) Demandeur: L'Air Liquide, Société Anonyme pour l'Etude et l'Exploitation des Procédés Georges Claude, 75007 Paris (FR)
(72) Inventeur: BARJHOUX, Pierre, 75007 PARIS (FR); CHANEAC, Robin, 75007 PARIS (FR)
(74) Mandataire: Air Liquide

(57) **Abrégé**

L'invention concerne un ensemble de stockage d'un fluide cryogénique liquéfié, un bateau et un procédé comprenant un réservoir (2) cryogénique, une conduite (3) de soutirage de fluide du réservoir comprenant un échangeur (9) de chaleur de réchauffage du fluide soutiré, un dispositif de refroidissement du fluide cryogénique dans le réservoir (2) comprenant un réfrigérateur (10) cryogénique à cycle, le réfrigérateur (10) comprenant un circuit (4) de cycle comprenant un fluide de cycle et une section de compression du fluide de cycle comprenant au moins un compresseur (5), une section (9, 111, 6) de refroidissement du fluide de cycle comprenant au moins échangeur de chaleur, une section de détente (7) du fluide de cycle comprenant au moins une turbine et/ou une vanne et une section (8, 6) de réchauffage du fluide de cycle comprenant au moins échangeur de chaleur, la section de refroidissement du fluide de cycle comprenant un échange de chaleur entre le circuit (4) de cycle et l'échangeur (9) de chaleur de réchauffage de la conduite (3) de soutirage.

## Description

L'invention concerne un ensemble de stockage d'un fluide cryogénique liquéfié, un véhicule comprenant un tel ensemble et un procédé.

L'invention concerne plus particulièrement un ensemble de stockage d'un fluide cryogénique liquéfié, par exemple de l'hydrogène, comprenant un réservoir cryogénique configuré pour stocker le fluide cryogénique, une conduite de soutirage de fluide du réservoir comprenant une extrémité amont reliée au réservoir et une extrémité aval destinée à être reliée à un utilisateur, par exemple un moteur utilisant le fluide, la conduite de soutirage de fluide comprenant un échangeur de chaleur de réchauffage du fluide soutiré, l'ensemble de stockage comprenant un dispositif de refroidissement du fluide cryogénique dans le réservoir comprenant un réfrigérateur cryogénique à cycle de réfrigérant muni d'un échangeur de chaleur de refroidissement configuré pour fournir une puissance froide de refroidissement au fluide du réservoir, le réfrigérateur comprenant un circuit de cycle comprenant un fluide de cycle et configuré pour soumettre le fluide de cycle à un cycle thermodynamique pour produire une puissance froide, le circuit de cycle comprenant une section de compression du fluide de cycle comprenant au moins un compresseur, une section de refroidissement du fluide de cycle comprenant au moins échangeur de chaleur, une section de détente du fluide de cycle comprenant au moins une turbine et/ou une vanne et une section de réchauffage du fluide de cycle comprenant au moins échangeur de chaleur.

Il est connu de refroidir ou sous refroidir le liquide cryogénique (tel qu'un combustible LNG ou LH2 par exemple) à bord de réservoirs pouvant être embarqués notamment sur bateau. Il est connu également de liquéfier le gaz de vaporisation dans de tels réservoirs. Ce refroidissement est généralement réalisé via un réfrigérateur à cycle dont les organes moteurs pilotant les compresseurs sont généralement du type électrique. L'électricité peut être produite par la combustion de ce gaz combustible qui peut être prélevé du réservoir (réchauffé, éventuellement vaporisé). Le rendement d'un tel ensemble peut donc être défini au moins en partie par la consommation de ce gaz combustible.

Un but de la présente invention est d'améliorer l'efficacité ou le rendement d'un tel ensemble.

A cette fin, l'ensemble selon l'invention, par ailleurs conforme à la définition générique qu'en donne le préambule ci-dessus, est essentiellement caractérisé en ce que la section de refroidissement du fluide de cycle comprend un échange de chaleur entre le circuit de cycle et l'échangeur de chaleur de réchauffage de la conduite de soutirage.

Par ailleurs, des modes de réalisation de l'invention peuvent comporter l'une ou plusieurs des caractéristiques suivantes :
- le passage de la conduite de dérivation dans l'échangeur de chaleur de réchauffage de la conduite de soutirage est à contre-courant du flux de fluide soutiré du réservoir,
- le passage de la conduite de dérivation dans l'échangeur de chaleur de réchauffage de la conduite de soutirage est à contre-courant du flux de fluide soutiré du réservoir,
- le circuit de cycle comprend plusieurs conduites de dérivation formant plusieurs passages dans l'échangeur de chaleur de réchauffage de la conduite de soutirage, les premières extrémités des différentes conduites de dérivation étant raccordées en aval de compresseurs respectifs distincts,
- l'échangeur de chaleur de réchauffage du fluide soutiré comprend ou est constitué d'un échangeur de chaleur de la section de refroidissement du fluide de cycle du circuit de cycle,
- l'échangeur de chaleur de réchauffage du fluide soutiré est un échangeur de chaleur de la section de refroidissement du fluide de cycle disposé en aval de la section de compression et en amont d'au moins une turbine et/ou une vanne de la section de détente du circuit de cycle,
- l'échangeur de chaleur de réchauffage du fluide soutiré est un échangeur de chaleur de la section de réchauffement du fluide de cycle du circuit (4) de cycle et disposé en aval de l'échangeur échangeur de chaleur de refroidissement, c'est-à-dire que l'échangeur de chaleur de réchauffage du fluide soutiré est un échangeur de chaleur commun à la section de refroidissement du fluide de cycle et à la section de réchauffage du fluide de cycle et assurant simultanément un échange de chaleur entre, un premier flux de gaz de cycle relativement chaud, un second flux de fluide de cycle relativement plus froid et le flux de gaz soutiré,
- la conduite de soutirage de fluide comprend un organe de détente du flux de fluide, par exemple une turbine configuré pour détendre le flux de fluide soutiré du réservoir et produire ainsi une puissance froide qui est fournie à l'échangeur de chaleur de réchauffage,
- l'organe de détente de la conduite de soutirage est une turbine reliée à un générateur configuré pour produire de l'électricité qui alimente un organe électrique de l'ensemble, par exemple un moteur électrique d'entraînement d'un compresseur de la section de compression et/ou reliée en accouplement mécanique avec un compresseur rotatif de la section de compression,
- la conduite de soutirage de fluide comprend un organe d'aspiration du fluide, par exemple une pompe disposée en partie inférieure du volume de stockage du réservoir et/ou un compresseur raccordé à la partie supérieure du volume de stockage du réservoir,
- la conduite de soutirage de fluide comprend, en aval de l'échangeur de chaleur de réchauffage, au moins un compresseur et/ou au moins un échangeur de chaleur supplémentaire,
- le dispositif de refroidissement du fluide cryogénique dans le réservoir comprend une conduite de prélèvement ayant, entre des extrémités amont et aval reliées au réservoir, une portion en échange thermique avec l'échangeur de chaleur de refroidissement du réfrigérateur, la conduite de prélèvement étant configurée pour prélever du fluide du réservoir, le refroidir et l'injecter dans le réservoir.

L'invention concerne également un véhicule de transport d'un fluide cryogénique liquéfié, par exemple un bateau, comprenant un ensemble de stockage d'un fluide cryogénique liquéfié conforme à l'une quelconque des caractéristiques ci-dessus ou ci-dessous.

L'invention concerne également un procédé de de stockage d'un fluide cryogénique liquéfié utilisant un tel ensemble ou un tel véhicule de transport, le procédé comprenant une étape de refroidissement du fluide cryogénique du réservoir via le réfrigérateur au cours de laquelle le fluide de cycle du réfrigérateur est refroidi, une étape de soutirage de fluide cryogénique du réservoir vers un utilisateur, une étape de réchauffage du fluide cryogénique soutiré, dans lequel au moins une partie du refroidissement du fluide de cycle du réfrigérateur et au moins une partie de réchauffage du fluide cryogénique soutiré sont réalisées conjointement par échange thermique entre du fluide cryogénique soutiré et du fluide de cycle.

Selon d'autres particularités possibles :
- le refroidissement du fluide de cycle du réfrigérateur réalisé conjointement avec le réchauffage du fluide cryogénique soutiré est le réchauffage du fluide de cycle en sortie d'au moins un étage de compression,
- le fluide cryogénique est un combustible, par exemple de l'hydrogène (H2) ou un gaz du gaz naturel contenant majoritairement du méthane (CH4), l'utilisateur comprenant un moteur de combustion dudit fluide.

D'autres particularités et avantages apparaîtront à la lecture de la description ci-après, faite en référence aux figures dans lesquelles :
[Fig. 1] est une vue schématique et partielle illustrant un premier exemple de structure et de fonctionnement de l'invention,
[Fig. 2] est une vue schématique et partielle illustrant un deuxième exemple de structure et de fonctionnement de l'invention,
[Fig. 3] est une vue schématique et partielle illustrant un troisième exemple de structure et de fonctionnement de l'invention.

### Description détaillée

Sur toutes les figures, les mêmes références se rapportent aux mêmes éléments. Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

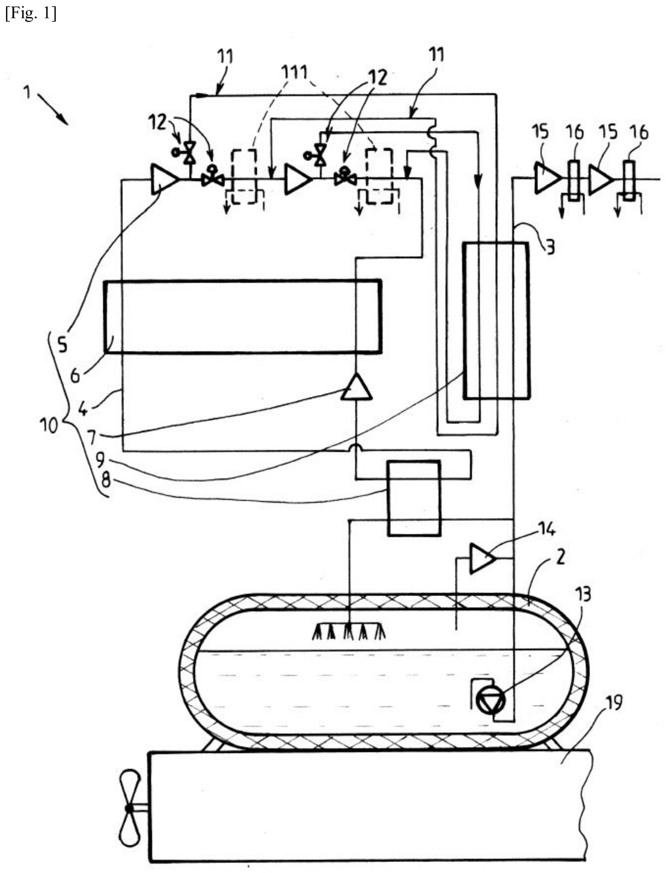

La [Fig.1] illustre schématiquement ensemble de stockage d'un fluide cryogénique liquéfié, par exemple de l'hydrogène liquéfié (LH2) ou du gaz naturel liquéfié (LNG). Comme schématisé, cet ensemble peut ne pas être fixe mais embarqué sur un véhicule, par exemple un bateau 19.

L'ensemble 1 comprend au moins un réservoir 2 cryogénique configuré pour stocker le fluide cryogénique, par exemple un réservoir cryogénique isolé thermiquement sous vide ou selon d'autres solutions techniques typiquement employées pour les applications LNG embarqués. L'ensemble comprend au moins une conduite 3 de soutirage de fluide du réservoir comprenant une extrémité amont reliée avec le volume de stockage du réservoir 2 et une extrémité aval destinée à être reliée à un utilisateur, par exemple un moteur de propulsion du véhicule utilisant le fluide comme combustible. Dans l'exemple possible illustré, la conduite 3 de soutirage comprend deux extrémités amont reliées respectivement aux portion inférieure et supérieure du volume de stockage pour prélever respectivement du liquide et du gaz. L'extrémité amont logée en partie inférieure du réservoir 2 comprend par exemple une pompe 13 immergée d'aspiration du liquide. L'extrémité débouchant en partie supérieure du réservoir 2 peut comporter un organe 14 de compression du gaz du ciel gazeux, cet organe 14 (par exemple un compresseur cryogénique) est situé par exemple à l'extérieur du réservoir 2.

La conduite 3 effectue un passage dans un échangeur 9 de chaleur de réchauffage du fluide soutiré (par exemple un vaporiseur). En aval, la conduite 3 de soutirage peut comporter un ou des compresseurs 15 et un ou des échangeurs de chaleur 16 de réchauffage ou de refroidissement selon le besoin pour fournir le gaz à la température et pression adéquate à l'utilisateur.

L'ensemble 1 (ou installation) comprend en outre un dispositif de refroidissement du fluide cryogénique dans le réservoir 2. Ce dispositif de refroidissement comprend un réfrigérateur 10 cryogénique à cycle de réfrigérant muni d'un échangeur 8 de chaleur de refroidissement configuré pour fournir une puissance froide de refroidissement au fluide du réservoir 2 (pour le refroidir ou le sous-refroidir ou liquéfier une fraction de sa phase gazeuse).

Dans l'exemple illustré, le refroidissement du fluide cryogénique dans le réservoir 2 est réalisé via une conduite 17 de prélèvement ayant entre des extrémités amont et aval reliées au réservoir 2, une portion en échange thermique avec l'échangeur 8 de chaleur de refroidissement du réfrigérateur 10. Par exemple, la conduite 17 de prélèvement peut être configurée pour prélever du fluide du réservoir 2 (liquide et/ou gaz), le refroidir hors du réservoir 2 et le renvoyer dans le réservoir 2 (refroidi ou liquéfié par exemple en partie supérieure via une rampe d'injection et/ou d'aspersion et/ou en partie inférieure du réservoir 2).

Comme illustré, au moins une partie de la conduite 17 de prélèvement peut être commune avec une partie de la conduite de soutirage (notamment la ou les extrémités reliées au volume de stockage avec le ou les organes 13 de pompage et/ou de compression 14).

Bien entendu l'invention n'est pas limitée à cet exemple. Ainsi, le refroidissement et/ou la liquéfaction du fluide dans le réservoir 2 peut être réalisée dans le réservoir 2. Dans ce cas, au moins une partie de l'échangeur 8 de refroidissement pourrait être située dans le réservoir 2.

Le réfrigérateur 10 comprend un circuit 4 de cycle comprenant un fluide de cycle (par exemple comprenant au moins l'un parmi : néon, argon, hélium, azote, oxygène et hydrogène (H2)) et configuré pour soumettre le fluide de cycle à un cycle thermodynamique pour produire une puissance froide à au moins une extrémité froide du circuit 4 de cycle, en particulier au niveau de l'échangeur 8 de chaleur de refroidissement.

Le circuit 4 de cycle comprend une section de compression du fluide de cycle comprenant au moins un compresseur 5 (et par exemple plusieurs compresseurs en série et/ou en parallèle), une section de refroidissement du fluide de cycle comprenant au moins échangeur de chaleur, une section de détente 7 du fluide de cycle comprenant au moins une turbine et/ou une vanne (et par exemple plusieurs turbines et/ou vanne(s) en série et/ou en parallèle) et une section 8, 6 de réchauffage du fluide de cycle comprenant au moins un échangeur de chaleur. La section de refroidissement et la section de réchauffage peuvent en particulier comprendre au moins un échangeur commun assurant simultanément le refroidissement d'un flux de gaz de cycle par échange de chaleur (par exemple à contre-courant) avec un autre flux de gaz de cycle plus froid qui est ainsi réchauffé. La section de refroidissement peut comporter en outre au moins un échangeur 111 de chaleur de refroidissement situé à la sortie d'au moins un des compresseurs et configuré pour refroidir le flux de fluide de cycle réchauffé par la compression. En aval de la section de détente, l'échangeur 8 de chaleur de refroidissement assure également un réchauffage du fluide de cycle lors de l'échange de chaleur avec l'application (le fluide) à refroidir.

Selon une particularité avantageuse, la section de refroidissement du fluide de cycle (et en particulier la section de refroidissement en sortie du ou des compresseurs) comprend un échange de chaleur entre le circuit 4 de cycle et l'échangeur 9 de chaleur de réchauffage de la conduite 3 de soutirage. C'est-à-dire qu'au moins une partie du refroidissement du fluide de cycle (par exemple après compression) peut être réalisé par un flux de fluide relativement plus froid soutiré du réservoir 2.

A cet effet, le circuit 4 de cycle peut comprendre au moins une conduite 11 de dérivation assurant un passage dans l'échangeur 9 de chaleur de réchauffage de la conduite 3 de soutirage par exemple en aval d'un compresseur 5. Dans l'exemple illustré, plusieurs conduites 11 de dérivation (deux) sont prévues en aval respectivement de (deux) compresseurs 5 ou étages de compression. C'est-à-dire qu'au moins une partie des refroidissement inter étage de compression peuvent être assurés par l'échangeur 5 de chaleur de réchauffage (au lieu d'utiliser classiquement un fluide caloporteur tel que l'eau ou l'air).

Chaque conduite 11 de dérivation peut comporter une extrémité raccordée en aval d'un compresseur 5 puis un passage dans l'échangeur 9 de chaleur de réchauffage de la conduite 3 de soutirage et une extrémité aval raccordée au circuit 4 de cycle en aval de la première extrémité. En variante ou en combinaison, seule une partie seulement de ce de fluide de cycle est prélevée par la conduite 11 de dérivation pour échanger avec l'échangeur 9 de chaleur de réchauffage. Ce flux réchauffé pourrait être remélangé ensuite avec le reste du débit de fluide de cycle (non prélevé) avant de rentrer dans le compresseur suivant.

Comme illustré, le passage dans l'échangeur 9 de chaleur peut être à contre-courant du flux de fluide soutiré circulant dans la conduite 3 de soutirage. Le circuit 4 de cycle comprend, par exemple, une vanne 12 d'isolation, par exemple sur la conduite 11 de dérivation, permettant de contrôler le flux de gaz de cycle dans la conduite 11 de dérivation (par exemple pour autoriser ou non sa circulation dans l'échangeur 9 de chaleur et éventuellement pour en réguler son débit).

Ainsi, une partie des frigories du fluide soutiré du réservoir 2 est utilisée dans le cycle de réfrigération, par exemple pour le refroidissement du fluide de cycle en sortie d'étage(s) de compression, par exemple à la température ambiante. La température relativement chaude du cycle est diminuée ce qui améliore l'efficacité de la compression et le rendement du réfrigérateur du réfrigérateur par rapport à un cycle ditherme de Carnot. La consommation énergétique (notamment électrique dans le cas de compresseurs entraînés par des moteurs électriques pour le même besoin d'extraction de calories à froid peut être diminuée de 8 à 12% environ par rapport aux solutions connues).

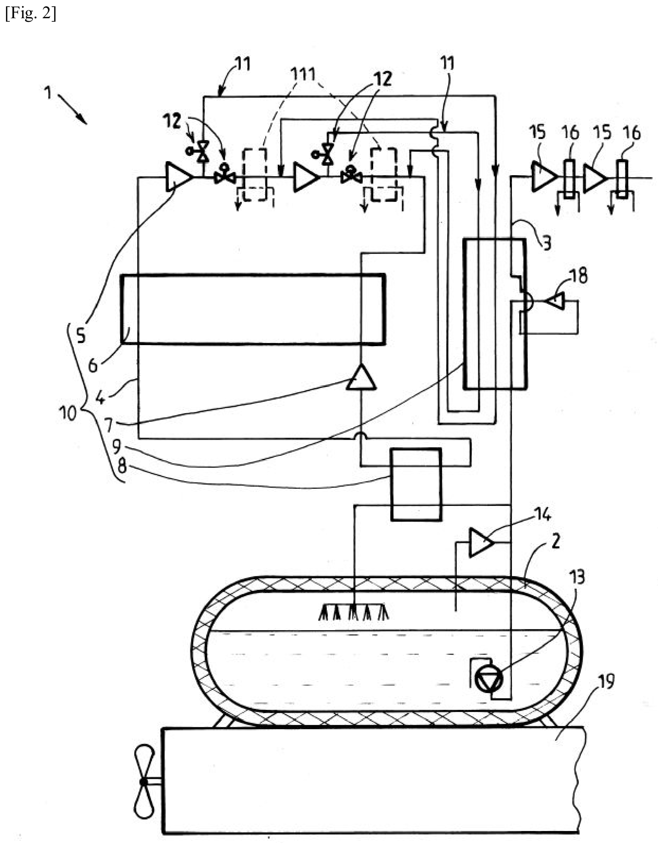

Au moins une partie des échangeurs 111 de refroidissement prévus usuellement en sortie de compression peuvent être omis.
L'exemple de la [Fig. 2] se distingue de celui décrit ci-dessus uniquement en ce que la conduite 3 de soutirage de fluide comprend un organe 18 de détente du flux de fluide, par exemple une turbine de détente configurée pour détendre le flux de fluide soutiré du réservoir 2 et produire ainsi une puissance froide qui est fournie à l'échangeur 9 de chaleur de réchauffage. Par exemple, le flux de fluide soutiré du réservoir 2 est pompé à une pression comprise entre 5 bara et 80 bara et, avant ou pendant sa circulation dans l'échangeur 9 de refroidissement, il est détendu dans une turbine 18 pour récupérer du froid qui est cédé à l'échangeur 9 de refroidissement en aval de la détente. Comme illustré, avant de retourner dans la conduite 3 de soutirage, le flux détendu dans cette turbine 18 peut réaliser un passage dans l'échangeur 9 de chaleur de réchauffage à plus basse température qu'au niveau du point d'entrée (aspiration) dans ladite turbine 18. C'est-à-dire que le flux détendu par la turbine 18 revient dans l'échangeur 9 de chaleur de réchauffage en amont de la bifurcation de la conduite 3 vers l'aspiration de la turbine 18.

De plus, cette turbine 18 de détente peut extraire du travail lors de la détente. Ce travail mécanique pourra être valorisé comme puissance d'alimentation des compresseurs 5 ou étages de compression du cycle 10 de réfrigération.

Cette turbine 18 peut être reliée à un générateur configuré pour produire de l'électricité qui alimente un ou des organes électriques de l'ensemble, par exemple un moteur électrique d'entraînement de compresseur(s). Ceci augmente encore le rendement de l'installation. Cette turbine 18 peut être dimensionnée pour produire l'électricité nécessaire (tout ou partie) à la fonction de reliquéfaction et peut utiliser la même technologie de turbomachines que celles employées dans le réfrigérateur 10.

De plus, cette turbine 18 de détente peut être couplée mécaniquement aux compresseurs 5 ou étages de compression du cycle de réfrigération à la façon de turbocompresseurs mono-arbres par exemple.

En variante ou en combinaison, un cycle de type Rankine peut être prévu pour récupérer de la puissance des flux relativement chaud en en sortie de compression du fluide de cycle et du flux relativement froid du flux de fluide soutiré du réservoir 2. Ceci augmente également l'efficacité du cycle de Carnot l'ensemble.

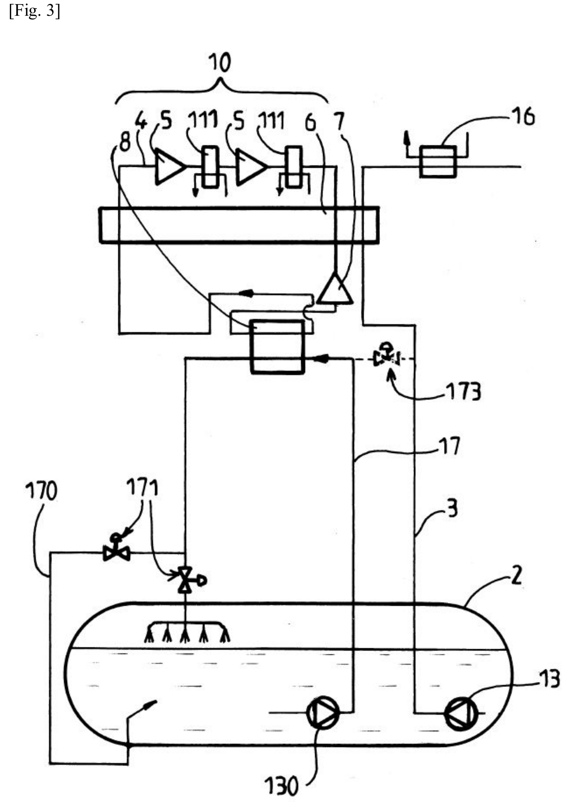

L'exemple de la [Fig. 3] se distingue de celui de la [Fig. 1] essentiellement en ce que l'échangeur 9 de chaleur de réchauffage du fluide soutiré est constitué d'un échangeur de chaleur de la section de refroidissement du fluide de cycle du circuit 4 de cycle. C'est-à-dire qu'il n'y a pas qu'il n'y a pas d'échangeur de chaleur dédié au réchauffage du fluide soutiré mais au contraire cette fonction est assurée par un échangeur de chaleur du circuit 4 de cycle du réfrigérateur 4 (via au moins un passage du flux de fluide soutiré dans un échangeur 9 de chaleur du circuit 4 de cycle du réfrigérateur). Au contraire, dans les solutions connues il y a traditionnellement, à bord du bateau, une fonction d'échangeur vaporiseur intégrant une source chaude comme un circuit d'eau de refroidissement, entraînant des risques de gel de ce dernier en cas de dysfonctionnement quelconque de ce même échangeur de chaleur.

Comme illustré, l'échangeur 9 de chaleur de réchauffage du fluide soutiré peut être un échangeur de chaleur de la section de refroidissement du fluide de cycle disposé en aval de la section de compression et en amont d'au moins une turbine et/ou une vanne de la section de détente 7 du circuit 4 de cycle. Cet échangeur 9 de chaleur de réchauffage du fluide soutiré peut être en particulier être un échangeur assurant à la fois le réchauffement du fluide de cycle et, simultanément, le refroidissement du fluide de cycle. Comme illustré, cet échangeur 9 de chaleur peut assurer simultanément un échange de chaleur (par exemple à contre-courant) entre, un premier flux de gaz de cycle relativement chaud sortant de la section de compression et avant une détente 7 et un second flux de fluide de cycle relativement plus froid sortant par exemple de l'échangeur 8 de refroidissement avant de retourner dans la section de compression. Cet échangeur 9 de chaleur comprend un passage supplémentaire pour le flux de fluide soutiré à réchauffer.

Comme illustré à la [Fig. 3], la conduite 17 de prélèvement peut être distincte de la conduite 3 de soutirage et peut en particulier comporter une extrémité amont distincte munie d'un organe 130 de pompage distinct de celui de la conduite 3 de soutirage. En particulier, l'organe 130 de pompage de la conduite de prélèvement peut être une pompe immergée en partie inférieure ayant un débit relativement plus grand et générant une pressurisation du fluide pompé relativement plus faible que la pompe 13 du circuit 3 de soutirage.

De plus, comme illustré à la [Fig. 3], la conduite 17 de prélèvement peut comporter une dérivation 170 au niveau de son extrémité aval et un ensemble de vanne(s) 171) permettant de renvoyer le fluide pompé et refroidi dans l'échangeur 8 de refroidissement en partie supérieure du réservoir (dans la partie gazeuse par exemple via une ou des buses) et/ou en partie inférieure (dans la phase liquide).

De plus, comme illustré schématiquement en pointillés, un raccordement 173 (de préférence muni ou associé à une vanne) peut être prévu entre la conduite 3 de soutirage et la conduite 17 de prélèvement (par exemple en amont de l'échangeur 8 de refroidissement) pour permettre le transfert de fluide entre les conduites.

## Revendications

1. Ensemble de stockage d'un fluide cryogénique liquéfié, par exemple de l'hydrogène (H2), comprenant un réservoir (2) cryogénique configuré pour stocker le fluide cryogénique, une conduite (3) de soutirage de fluide du réservoir comprenant une extrémité amont reliée au réservoir et une extrémité aval destinée à être reliée à un utilisateur, par exemple un moteur utilisant le fluide, la conduite (3) de soutirage de fluide comprenant un échangeur (9) de chaleur de réchauffage du fluide soutiré, l'ensemble de stockage comprenant un dispositif de refroidissement du fluide cryogénique dans le réservoir (2) comprenant un réfrigérateur (10) cryogénique à cycle de réfrigérant muni d'un échangeur (8) de chaleur de refroidissement configuré pour fournir une puissance froide de refroidissement au fluide du réservoir (2), le réfrigérateur (10) comprenant un circuit (4) de cycle comprenant un fluide de cycle et configuré pour soumettre le fluide de cycle à un cycle thermodynamique pour produire une puissance froide, le circuit (4) de cycle comprenant une section de compression du fluide de cycle comprenant au moins un compresseur (5), une section (9, 111, 6) de refroidissement du fluide de cycle comprenant au moins échangeur de chaleur, une section de détente (7) du fluide de cycle comprenant au moins une turbine et/ou une vanne et une section (8, 6) de réchauffage du fluide de cycle comprenant au moins échangeur de chaleur, **caractérisé en ce que** la section de refroidissement du fluide de cycle comprend un échange de chaleur entre le circuit (4) de cycle et l'échangeur (9) de chaleur de réchauffage de la conduite (3) de soutirage.

2. Ensemble selon la revendication 1, **caractérisé en ce que** le circuit (4) de cycle comprend une conduite (11) de dérivation ayant une première extrémité raccordée en aval d'un compresseur (5) un passage dans l'échangeur (9) de chaleur de réchauffage de la conduite (3) de soutirage et une seconde extrémité raccordée au circuit (4) de cycle en aval de la première extrémité, le circuit (4) de cycle comprenant un ensemble de vanne(s) (12) configuré pour contrôler le flux de gaz de cycle dans la conduite (11) de dérivation.

3. Ensemble selon la revendication 2, **caractérisé en ce que** le passage de la conduite (11) de dérivation dans l'échangeur (9) de chaleur de réchauffage de la conduite (3) de soutirage est à contre-courant du flux de fluide soutiré du réservoir (2).

4. Ensemble selon la revendication 2 ou 3, **caractérisé en ce que** le circuit (4) de cycle comprend plusieurs conduites (11) de dérivation formant plusieurs passages dans l'échangeur (9) de chaleur de réchauffage de la conduite (3) de soutirage, les premières extrémités des différentes conduites (11) de dérivation étant raccordées en aval de compresseurs (5) respectifs distincts.

5. Ensemble selon l'une quelconque des revendications précédentes, **caractérisé en ce que** l'échangeur (9) de chaleur de réchauffage du fluide soutiré comprend ou est constitué d'un échangeur de chaleur de la section de refroidissement du fluide de cycle du circuit (4) de cycle.

6. Ensemble selon la revendication précédente, **caractérisé en ce que** l'échangeur (9) de chaleur de réchauffage du fluide soutiré est un échangeur de chaleur de la section de refroidissement du fluide de cycle disposé en aval de la section de compression et en amont d'au moins une turbine et/ou une vanne de la section de détente (7) du circuit (4) de cycle.

7. Ensemble selon la revendication précédente, **caractérisé en ce que** l'échangeur (9) de chaleur de réchauffage du fluide soutiré est un échangeur de chaleur de la section de réchauffement du fluide de cycle du circuit (4) de cycle et disposé en aval de l'échangeur échangeur (8) de chaleur de refroidissement, c'est-à-dire que l'échangeur (9) de chaleur de réchauffage du fluide soutiré est un échangeur de chaleur commun à la section de refroidissement du fluide de cycle et à la section de réchauffage du fluide de cycle et assurant simultanément un échange de chaleur entre, un premier flux de gaz de cycle relativement chaud, un second flux de fluide de cycle relativement plus froid et le flux de gaz soutiré.

8. Ensemble selon l'une quelconque des revendications précédentes, **caractérisé en ce que** la conduite (3) de soutirage de fluide comprend un organe (18) de détente du flux de fluide, par exemple une turbine configuré pour détendre le flux de fluide soutiré du réservoir (2) et produire ainsi une puissance froide qui est fournie à l'échangeur (9) de chaleur de réchauffage.

9. Ensemble selon la revendication précédente, **caractérisé en ce que** l'organe (18) de détente de la conduite de soutirage est une turbine (18) reliée à un générateur configuré pour produire de l'électricité qui alimente un organe électrique de l'ensemble, par exemple un moteur électrique d'entraînement d'un compresseur de la section de compression et/ou reliée en accouplement mécanique avec un compresseur (5) rotatif de la section de compression.

10. Ensemble selon l'une quelconque des revendications précédentes, **caractérisé en ce que** la conduite (3) de soutirage de fluide comprend un organe d'aspiration du fluide, par exemple une pompe (13) disposée en partie inférieure du volume de stockage du réservoir (2) et/ou un compresseur (14) raccordé à la partie supérieure du volume de stockage du réservoir (2).

11. Ensemble selon l'une quelconque des revendications précédentes, **caractérisé en ce que** la conduite (3) de soutirage de fluide comprend, en aval de l'échangeur (9) de chaleur de réchauffage, au moins un compresseur (15) et/ou au moins un échangeur (16) de chaleur supplémentaire.

12. Ensemble selon l'une quelconque des revendications précédentes, **caractérisé en ce que** le dispositif de refroidissement du fluide cryogénique dans le réservoir (2) comprend une conduite (17) de prélèvement ayant, entre des extrémités amont et aval reliées au réservoir (2), une portion en échange thermique avec l'échangeur (8) de chaleur de refroidissement du réfrigérateur (10), la conduite (17) de prélèvement étant configurée pour prélever du fluide du réservoir, le refroidir et l'injecter dans le réservoir (2).

13. Véhicule de transport d'un fluide cryogénique liquéfié, par exemple un bateau, comprenant un ensemble de stockage d'un fluide cryogénique liquéfié conforme à l'une quelconque des revendications précédentes.

14. Procédé de de stockage d'un fluide cryogénique liquéfié utilisant un ensemble selon l'une quelconque des revendications 1 à 12 ou un véhicule de transport selon la revendication 13, comprenant une étape de refroidissement du fluide cryogénique du réservoir (2) via le réfrigérateur (10) au cours de laquelle le fluide de cycle du réfrigérateur est refroidi, une étape de soutirage (3) de fluide cryogénique du réservoir (2) vers un utilisateur, une étape de réchauffage (9) du fluide cryogénique soutiré, dans lequel au moins une partie du refroidissement du fluide de cycle du réfrigérateur et au moins une partie de réchauffage (9) du fluide cryogénique soutiré sont réalisées conjointement par échange thermique entre du fluide cryogénique soutiré et du fluide de cycle.

15. Procédé selon la revendication 14, **caractérisé en ce que** le refroidissement du fluide de cycle du réfrigérateur réalisé conjointement avec le réchauffage (9) du fluide cryogénique soutiré est le réchauffage du fluide de cycle en sortie d'au moins un étage de compression.

16. Procédé selon la revendication 14 ou 15, **caractérisé en ce que** le fluide cryogénique est un combustible, par exemple de l'hydrogène (H2) ou un gaz du gaz naturel contenant majoritairement du méthane (CH4), l'utilisateur comprenant un moteur de combustion dudit fluide.
